# EUROPEAN PATENT APPLICATION

(11) **EP 4 613 588 A1**
(43) Date of publication of application: **10.09.2025**
(21) Application number: 22966080.8
(22) Date of filing: 22.11.2022
(51) Int. Cl.: B60W 30/06

(54) **AUTOMATIC PARKING METHOD AND DEVICE**

(71) Applicant: Shenzhen Yinwang Intelligent Technologies Co., Ltd., Shenzhen, Guangdong 518129 (CN)
(72) Inventor: NIE, Zhongliang, Shenzhen, Guangdong 518129 (CN); SU, Xiaoran, Shenzhen, Guangdong 518129 (CN); JIANG, Yu, Shenzhen, Guangdong 518129 (CN)
(74) Representative: Maiwald GmbH
(86) International application number: PCT/CN2022/133484
(87) International publication number: WO 2024/108380

(57) **Abstract**

An automatic parking method is provided, including: determining parking space information of a plurality of candidate parking spaces based on a first image and a second image of an ego vehicle, where the parking space information indicates locations of the parking spaces in a stereo garage, the first image is an environmental image in a first orientation of the ego vehicle, and the second image is a panoramic surround-view image of the ego vehicle; determining a target parking space from the plurality of candidate parking spaces based on the parking space information of the plurality of candidate parking spaces; and controlling the ego vehicle to be parked in the target parking space. According to the automatic parking method, a parking space can be more accurately recognized, and accuracy of a parking space detection result is improved. An automatic parking apparatus is further provided.

## Description

### TECHNICAL FIELD

This application relates to the field of autonomous driving technologies, and in particular, to an automatic parking method and apparatus.

### BACKGROUND

With development of intelligent driving technologies, to meet people's pursuit of convenient and safe parking experience, an automatic parking function is increasingly widely applied. The automatic parking function can be applied to a cruise phase and a parking phase. In the cruise phase, the automatic parking function is mainly used to detect a parking space, and in the parking phase, the automatic parking function is mainly used to park a vehicle in a detected parking space.

However, when the current automatic parking function detects a parking space, obstacle information may be recognized as parking space information, that is, an obstacle that is not a parking space is recognized as a parking space. Subsequently, when a vehicle is parked in the detected inaccurate parking space, a risk of colliding with various obstacles such as another vehicle may occur.

Therefore, how to improve accuracy of a parking space detection result to safely park a vehicle in a parking space is crucial to implementation of the automatic parking function.

### SUMMARY

This application provides an automatic parking method and apparatus, to improve accuracy of a parking space detection result.

To achieve the foregoing objective, this application uses the following technical solutions.

According to a first aspect, this application provides an automatic parking method. The method includes: determining parking space information of a plurality of candidate parking spaces based on a first image and a second image of an ego vehicle, where the parking space information indicates locations of the parking spaces in a stereo garage, the first image is an environmental image in a first orientation of the ego vehicle, and the second image is a panoramic surround-view image of the ego vehicle; determining a target parking space from the plurality of candidate parking spaces based on the parking space information of the plurality of candidate parking spaces; and controlling the ego vehicle to be parked in the target parking space.

Based on the foregoing technical solution, in a parking scenario of the stereo garage and in a vehicle cruise phase, namely, in a process of searching for a parking space, the parking space information of the plurality of candidate parking spaces is determined based on an environmental image in a specific orientation of the ego vehicle and the panoramic surround-view image of the ego vehicle. The parking space information may indicate the locations of the parking spaces. In other words, the parking spaces are detected based on the environmental image in the specific orientation and the panoramic image. If a parking space is detected in both the environmental image in the first orientation and the panoramic image, it indicates that a probability of existence of the parking space is high. In this way, accuracy of a parking space detection result can be improved. In addition, the panoramic image has a wider field of view, so that a detection probability of a parking space can be improved.

In a possible design, the determining parking space information of a plurality of candidate parking spaces based on a first image and a second image of an ego vehicle includes: determining parking space information of at least one first candidate parking space based on the first image of the ego vehicle, where the first image includes an image of the at least one first candidate parking space; and determining parking space information of at least one second candidate parking space based on the second image of the ego vehicle, where the second image includes an image of the at least one second candidate parking space, and the at least one second candidate parking space includes one or more of the at least one first candidate parking space.

Based on this design, the parking spaces are detected based on the environmental image in the specific orientation and the panoramic image. If a parking space is detected in both the environmental image in the specific orientation and the panoramic image, it indicates that a probability of existence of the parking space is high. In this way, the accuracy of the parking space detection result can be improved. In addition, the panoramic image has a wider field of view, which can improve the detection probability of the parking space.

In a possible design, the parking space information of the at least one first candidate parking space includes at least one of a parking space line, a parking space corner, and a location relationship between parking space corners.

In a possible design, the parking space information of the at least one second candidate parking space includes at least one of an entrance direction of the parking space and vertex coordinates of the parking space.

In a possible design, the determining a target parking space from the plurality of candidate parking spaces based on the parking space information of the plurality of candidate parking spaces includes: determining at least one third candidate parking space based on the parking space information of the at least one first candidate parking space and the parking space information of the at least one second candidate parking space, where the third candidate parking space is a parking space whose confidence level is greater than or equal to a preset confidence level threshold in the at least one second candidate parking space and that belongs to the at least one first candidate parking space, and the confidence level indicates the accuracy of the parking space detection result; and determining the target parking space based on the at least one third candidate parking space.

Based on this design, the target parking space is determined based on the confidence level of the candidate parking space, and the confidence level may reflect accuracy of a parking space detection result. In this way, a candidate parking space whose confidence level meets the preset confidence level threshold, for example, whose confidence level is high, is used as the target parking space, that is, an accurately detected candidate parking space is used as the target parking space. This can further improve the accuracy of the parking space detection result.

In a possible design, the method further includes: capturing a third image of the ego vehicle in a process of controlling the ego vehicle to be parked in the target parking space, where the third image is an environmental image in a third orientation of the ego vehicle, and the third image includes an image of the target parking space; and updating parking space information of the target parking space based on the third image. Based on this design, in the parking scenario of the stereo garage and in a parking phase, that is, in a process of parking the ego vehicle in the target parking space, the parking space information of the target parking space is calibrated by using the third image including the target parking space. This can improve parking accuracy.

In a possible design, the determining parking space information of at least one first candidate parking space based on the first image of the ego vehicle includes: inputting the first image into a first preset model, and outputting the parking space information of the at least one first candidate parking space through the first preset model. Based on this design, the first image is input into the model to recognize the candidate parking space, and in comparison with a conventional feature extraction algorithm or the like, the model is less affected by an environment, light, and the like. This can improve accuracy of a parking space detection result. In addition, in comparison with the conventional feature extraction algorithm or the like, the model avoids excessive manual parameter adjustment and can improve robustness of an overall algorithm.

In a possible design, the determining parking space information of at least one second candidate parking space based on the second image of the ego vehicle includes: inputting the second image into a second preset model, and outputting the parking space information of the at least one second candidate parking space through the second preset model. Based on this design, the panoramic image is input into the model to recognize the candidate parking space, and in comparison with a conventional feature extraction algorithm or the like, the model is less affected by an environment, light, and the like. This can improve accuracy of a parking space detection result. In addition, in comparison with the conventional feature extraction algorithm or the like, the model avoids excessive manual parameter adjustment and can improve robustness of an overall algorithm.

According to a second aspect, this application provides an automatic parking apparatus. The automatic parking apparatus includes a corresponding module or unit for implementing the foregoing method. The module or unit may be implemented by hardware, or may be implemented by software, or may be implemented by hardware by executing corresponding software. In a possible design, the automatic parking apparatus includes a processing unit (or referred to as a processing module). The processing unit is configured to determine parking space information of a plurality of candidate parking spaces based on a first image and a second image of an ego vehicle, where the parking space information indicates locations of the parking spaces in a stereo garage, the first image is an environmental image in a first orientation of the ego vehicle, and the second image is a panoramic surround-view image of the ego vehicle; the processing unit is further configured to determine a target parking space from the plurality of candidate parking spaces based on the parking space information of the plurality of candidate parking spaces; and the processing unit is further configured to control the ego vehicle to be parked in the target parking space.

In a possible design, the processing unit is specifically configured to determine parking space information of at least one first candidate parking space based on the first image of the ego vehicle, where the first image includes an image of the at least one first candidate parking space; and the processing unit is specifically configured to determine parking space information of at least one second candidate parking space based on the second image of the ego vehicle, where the second image includes an image of the at least one second candidate parking space, and the at least one second candidate parking space includes one or more of the at least one first candidate parking space.

In a possible design, the parking space information of the at least one first candidate parking space includes at least one of a parking space line, a parking space corner, and a location relationship between parking space corners.

In a possible design, the parking space information of the at least one second candidate parking space includes at least one of an entrance direction of the parking space and vertex coordinates of the parking space.

In a possible design, the processing unit is specifically configured to determine at least one third candidate parking space based on the parking space information of the at least one first candidate parking space and the parking space information of the at least one second candidate parking space, where the third candidate parking space is a parking space whose confidence level is greater than or equal to a preset confidence level threshold in the at least one second candidate parking space and that belongs to the at least one first candidate parking space, and the confidence level indicates accuracy of a parking space detection result; and the processing unit is specifically configured to determine the target parking space based on the at least one third candidate parking space.

In a possible design, the processing unit is further configured to capture a third image of the ego vehicle in a process of controlling the ego vehicle to be parked in the target parking space, where the third image is an environmental image in a third orientation of the ego vehicle, and the third image includes an image of the target parking space; and the processing unit is further configured to update parking space information of the target parking space based on the third image.

In a possible design, the processing unit is specifically configured to: input the first image into a first preset model, and output the parking space information of the at least one first candidate parking space through the first preset model.

In a possible design, the processing unit is specifically configured to: input the second image into a second preset model, and output the parking space information of the at least one second candidate parking space through the second preset model.

According to a third aspect, this application provides an automatic parking apparatus, including a processor, where the processor is coupled to a memory, and the processor is configured to execute a computer program stored in the memory, for the automatic parking apparatus to perform the method according to the first aspect and any design of the first aspect. Optionally, the memory may be coupled to the processor, or may be independent of the processor.

In a possible design, the automatic parking apparatus further includes a communication interface, and the communication interface may be used by the automatic parking apparatus to communicate with another apparatus. For example, the communication interface may be a transceiver, an input/output interface, an interface circuit, an output circuit, an input circuit, a pin, a related circuit, or the like.

The automatic parking apparatus in the third aspect may be a computing platform in an intelligent driving system, and the computing platform may be an in-vehicle computing platform or a cloud computing platform.

According to a fourth aspect, this application provides a computer-readable storage medium. The computer-readable storage medium includes a computer program or instructions. When the computer program or the instructions are run on an autonomous driving apparatus, the autonomous driving apparatus is enabled to perform the method according to the first aspect and any design of the first aspect.

According to a fifth aspect, this application provides a computer program product. The computer program product includes a computer program or instructions. When the computer program or the instructions are run on a computer, the computer is enabled to perform the method according to the first aspect and any design of the first aspect.

According to a sixth aspect, this application provides a chip system, including at least one processor and at least one interface circuit. The at least one interface circuit is configured to: perform a sending/receiving function, and send instructions to the at least one processor. When the at least one processor executes the instructions, the at least one processor performs the method according to the first aspect and any design of the first aspect.

It should be noted that, for technical effects brought by any design of the second aspect to the sixth aspect, refer to technical effects brought by a corresponding design of the first aspect. Details are not described herein again.

### BRIEF DESCRIPTION OF DRAWINGS

FIG. 1 is a diagram of a system architecture according to an embodiment of this application;
FIG. 2 is a diagram of a structure of a control device according to an embodiment of this application;
FIG. 3 is a functional block diagram of a vehicle according to an embodiment of this application;
FIG. 4 is a diagram of a camera deployed on a vehicle according to an embodiment of this application;
FIG. 5 is a schematic flowchart of an automatic parking method according to an embodiment of this application;
FIG. 6(1) and FIG. 6(2) are diagrams of scenarios of target orientations according to an embodiment of this application;
FIG. 7 is a diagram of an entrance direction of a parking space according to an embodiment of this application;
FIG. 8 is a diagram of a parking scenario according to an embodiment of this application;
FIG. 9 is a diagram of a structure of an automatic parking apparatus according to an embodiment of this application; and
FIG. 10 is a diagram of a structure of a chip system according to an embodiment of this application.

### DESCRIPTION OF EMBODIMENTS

The following describes technical solutions of embodiments in this application with reference to accompanying drawings.

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one of a, b, or c may represent: a, b, c, a and b, a and c, b and c, and a and b and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" indicates giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

Features, structures, or characteristics in this application may be combined in one or more embodiments in any proper manner. Sequence numbers of processes do not mean execution sequences in embodiments of this application. The execution sequences of the processes should be determined according to functions and internal logic of the processes, and should not be construed as any limitation on the implementation processes of embodiments of this application.

In some scenarios, some optional features in embodiments of this application may be independently implemented without depending on another feature, to resolve a corresponding technical problem and achieve a corresponding effect. Alternatively, in some scenarios, the optional features may be combined with other features based on a requirement.

In this application, unless otherwise specified, for same or similar parts in embodiments, refer to each other. In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment. The implementations of this application are not intended to limit the protection scope of this application.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of a new service scenario, the technical solutions provided in embodiments of this application are also applicable to similar technical problems.

The technical solutions in embodiments of this application may be applied to various automatic parking systems, for example, may be an automatic parking system based on any communication standard like vehicle to everything (vehicle to everything, V2X) communication, device-to-device (device-to-device, D2D) communication, internet of vehicles, or an unmanned driving system.

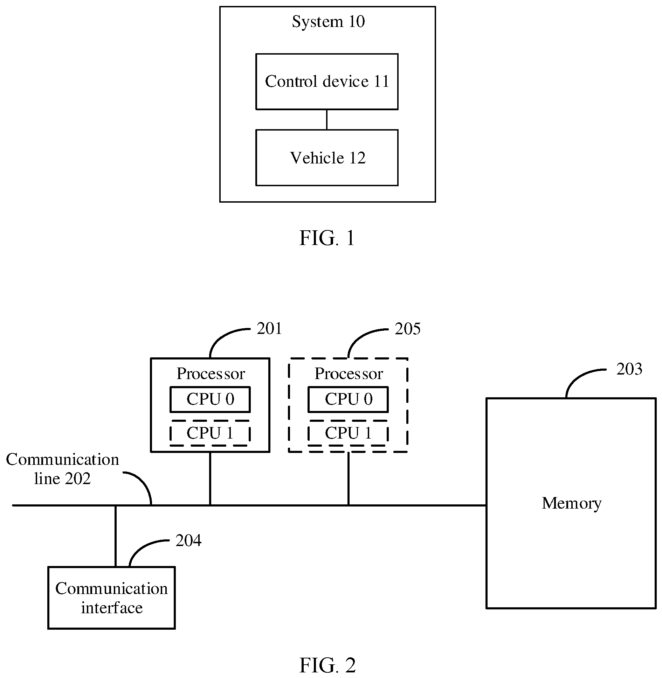

For example, FIG. 1 is a diagram of a system architecture according to an embodiment of this application. As shown in FIG. 1, a system 10 includes a control device 11 and a vehicle 12.

The control device 11 may be a device that can provide an automatic parking service for the vehicle 12 and that has wireless and/or wired receiving and sending functions, or may be a module, a chip system, a subsystem, or another component disposed inside the device, or may be a device set including a plurality of devices. In embodiments of this application, the device, the device set, the module, the chip, the subsystem, or the another component that can provide the automatic parking service is collectively referred to as a control device. The control device 11 includes but is not limited to an automatic parking server, a control module, a terminal device, and the like.

The vehicle 12 may be a vehicle that supports an automatic parking function. The vehicle 12 may receive an automatic parking instruction of the control device in a wireless manner, and complete an automatic parking operation according to the instruction; and may receive navigation information from a navigation service provider, and implement autonomous driving based on the navigation information. The vehicle 12 usually has one or more built-in in-vehicle modules, in-vehicle assemblies, in-vehicle components, in-vehicle chips, or in-vehicle units. The vehicle may implement, by using the built-in in-vehicle modules, in-vehicle assemblies, in-vehicle components, in-vehicle chips, or in-vehicle units, an automatic parking method provided in this application. Optionally, the vehicle may further include various devices configured to implement the automatic parking operation, for example, an in-vehicle radar, an in-vehicle infrared imager, an in-vehicle positioning device, an in-vehicle lighting device, and a vehicle control system.

Optionally, the control device 11 and the vehicle 12 may be integrated together, or may be separately disposed.

It may be understood that FIG. 1 is merely a simplified diagram of an example for ease of understanding. During actual application, the foregoing system may further include another device, which is not shown in the figure.

For example, the control device 11 in this embodiment of this application may be implemented by using different devices. For example, the control device 11 in this embodiment of this application may be implemented by using a communication device shown in FIG. 2. FIG. 2 is a diagram of a hardware structure of the control device 11 according to an embodiment of this application. The control device 11 includes at least one processor 201, a communication line 202, a memory 203, and at least one communication interface 204.

The processor 201 may be a general-purpose CPU, a microprocessor, an ASIC, or one or more integrated circuits configured to control program execution of the solutions of this application.

The communication line 202 may include a path on which information is transferred between the foregoing components.

The communication interface 204 is configured to communicate with another device. In this embodiment of this application, the communication interface 204 may be a module, a circuit, a bus, an interface, a transceiver, or another apparatus that can implement a communication function. Optionally, when the communication interface is the transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component that integrates information sending and receiving functions. A specific implementation of the transceiver is not limited in this embodiment of this application.

The memory 203 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. The memory 203 may exist independently, and be connected to the processor 201 through the communication line 202. The memory 203 may alternatively be integrated with the processor 201.

The memory 203 is configured to store computer-executable instructions for implementing the solutions of this application. The processor 201 is configured to execute the computer-executable instructions stored in the memory 203, to implement a method provided in the following embodiments of this application.

Optionally, the computer-executable instructions in this embodiment of this application may also be referred to as application code, instructions, a computer program, or another name. This is not specifically limited in this embodiment of this application.

During specific implementation, in an embodiment, the processor 201 may include one or more CPUs, for example, a CPU 0 and a CPU 1 in FIG. 2.

During specific implementation, in an embodiment, the control device 11 may include a plurality of processors such as the processor 201 and a processor 205 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

The control device 11 may be a general-purpose device or a dedicated device. A type of the control device 11 is not limited in this embodiment of this application.

It may be understood that the schematic structure in this embodiment of this application does not constitute a specific limitation on the control device 11. In some other embodiments of this application, the control device 11 may include more or fewer components than those shown in the figure, or combine some components, or split some components, or have a different component arrangement. The components shown in the figure may be implemented by hardware, software, or a combination of software and hardware.

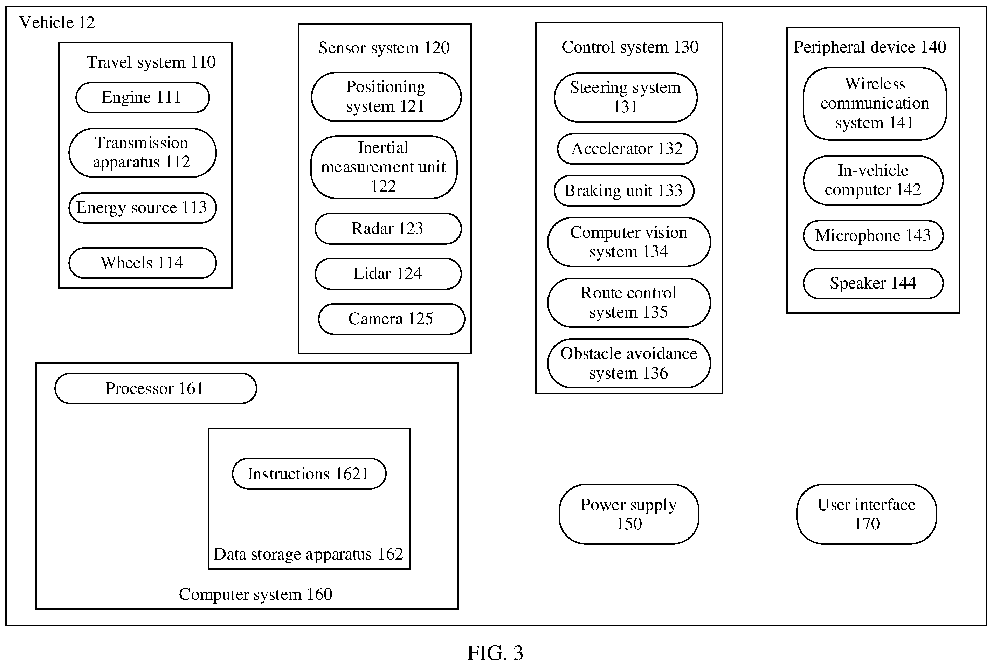

An example in which the vehicle 12 is an autonomous vehicle is used. FIG. 3 is a functional block diagram of the vehicle 12.

The vehicle 12 may include various subsystems, such as a travel system 110, a sensor system 120, a control system 130, one or more peripheral devices 140, a power supply 150, a computer system 160, and a user interface 170. Optionally, the vehicle 12 may include more or fewer subsystems, and each subsystem may include a plurality of elements. In addition, the subsystems and the elements of the vehicle 12 may be all interconnected in a wired or wireless manner.

The travel system 110 includes a component providing power to the vehicle 12 for moving. In an embodiment, the travel system 110 includes an engine 111, a transmission apparatus 112, an energy source 113, and wheels 114. The engine 111 may be an internal combustion engine, an electric motor, an air compression engine, or a combination of other types of engines, for example, a hybrid engine formed by a gasoline engine and an electric motor, or a hybrid engine formed by an internal combustion engine and an air compression engine. The engine 111 converts the energy source 113 into mechanical energy.

Examples of the energy source 113 include gasoline, diesel, another oil-based fuel, propane, another compressed gas-based fuel, ethanol, a solar panel, a battery, and another power source. The energy source 113 may also provide energy for another system of the vehicle 12.

The transmission apparatus 112 may transmit mechanical power from the engine 111 to the wheels 114. The transmission apparatus 112 may include a gearbox, a differential, and a drive shaft. In an embodiment, the transmission apparatus 112 may further include another component like a clutch. The drive shaft may include one or more shafts that may be coupled to one or more wheels 114.

The sensor system 120 may include several sensors that sense information about an ambient environment of the vehicle 12. For example, the sensor system 120 includes a positioning system 121 (the positioning system may be a global positioning system (global positioning system, GPS), a BeiDou system, or another positioning system), an inertial measurement unit (inertial measurement unit, IMU) 122, a radar 123, a lidar 124, and a camera 125. One or more pieces of sensor data from these sensors may be used to detect objects and corresponding features (a location, a shape, a direction, a speed, and the like) of the objects. Such detection and recognition are key functions of secure operations of autonomous driving of the vehicle 12.

The positioning system 121 may be configured to estimate a geographical location of the vehicle 12. The IMU 122 is configured to sense location and orientation changes of the vehicle 12 based on inertial acceleration. In an embodiment, the IMU 122 may be a combination of an accelerometer and a gyroscope.

The radar 123 may sense an object in the ambient environment of the vehicle 12 by using a radio signal. In some embodiments, in addition to sensing the object, the radar 123 may be further configured to sense a speed and/or a heading direction of the object.

The lidar 124 may use a laser to sense an object in an environment in which the vehicle 12 is located. In some embodiments, the lidar 124 may include one or more laser sources, laser scanners, one or more detectors, and another system component.

The camera 125 may be configured to capture an image of the ambient environment of the vehicle 12 and a plurality of images in a vehicle driving cabin. In some embodiments of this application, the image of the ambient environment of the vehicle 12 includes but is not limited to one or more images of an unoccupied parking space, an occupied parking space, a vehicle, a person, an obstacle, and the like.

The camera 125 may be a static camera or a video camera. For example, the camera 125 may include but is not limited to one or more of a long distance camera, a medium distance camera, a short distance camera, a fisheye camera, and the like. A type of the camera 125 is not limited in this application.

In some embodiments of this application, there may be a plurality of cameras 125, and the cameras 125 are separately configured to capture images in different orientations of the vehicle 12. For example, the orientations of the vehicle may include but are not limited to various orientations such as east, west, south, north, northeast, southeast, southwest, and northwest. Alternatively, the orientations of the vehicle may include but are not limited to various orientations such as up, down, left, right, upper left, lower left, upper right, and lower right. In some embodiments, the camera 125 may be deployed at different locations of the vehicle 12, for example, a head of the vehicle, a rear of the vehicle, two sides of a vehicle body, and a top of the vehicle, to help capture the images in different orientations of the vehicle 12.

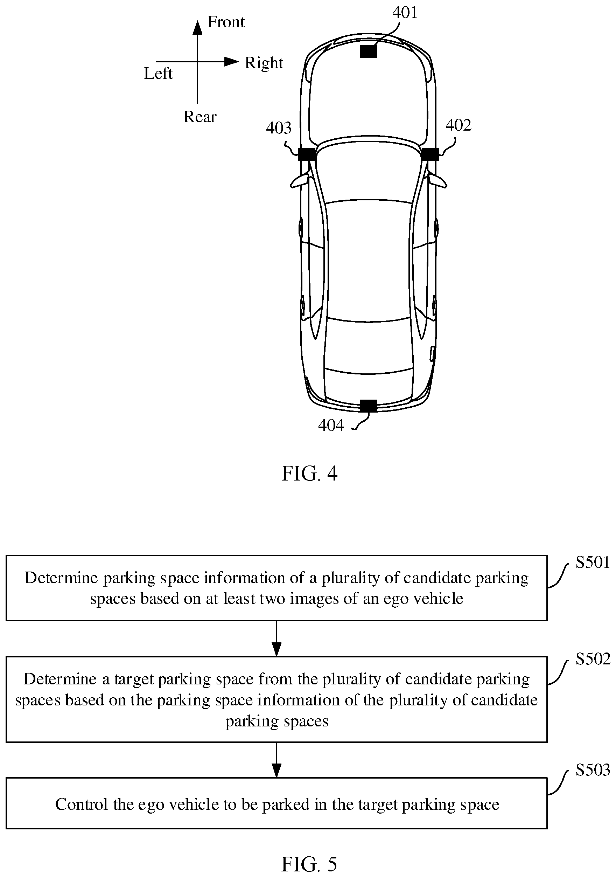

For example, FIG. 4 is a diagram of a camera deployed on a vehicle according to some embodiments of this application. As shown in FIG. 4, a camera 401 is deployed at a head of the vehicle, and may be configured to capture an environmental image in front of the vehicle. A camera 402 is deployed on a right side of a vehicle body, and may be configured to capture an environmental image on the right side of the vehicle. A camera 403 is deployed on a left side of the vehicle body, and may be configured to capture an environmental image on the left side of the vehicle. A camera 404 is deployed at a rear of the vehicle, and may be configured to capture an environmental image at the rear of the vehicle.

The control system 130 may control operations of the vehicle 12 and its components. The control system 130 may include various elements, for example, a steering system 131, an accelerator 132, a braking unit 133, a computer vision system 134, a route control system 135, and an obstacle avoidance system 136.

The steering system 131 may be operated to adjust a heading direction of the vehicle 12. For example, in an embodiment, the steering system 131 may be a steering wheel system.

The accelerator 132 is configured to control an operating speed of the engine 111 and further control a speed of the vehicle 12.

The braking unit 133 is configured to control the vehicle 12 to decelerate.

The computer vision system 134 may be operated to process and analyze an image captured by the camera 125, to recognize an object and/or a feature in the ambient environment of the vehicle 12 and a body feature and a facial feature of a driver in the vehicle driving cabin. The object and/or the feature may include a traffic signal, a road condition, and an obstacle, and the body feature and the facial feature of the driver include a behavior, a line of sight, an expression, and the like of the driver.

The route control system 135 is configured to determine a traveling route of the vehicle 12. In some embodiments, the route control system 135 may determine the traveling route of the vehicle 12 based on data from the sensor, the positioning system 121, and one or more predetermined maps.

The obstacle avoidance system 136 is configured to recognize, evaluate, and avoid or otherwise bypass a potential obstacle in an environment of the vehicle 12.

Certainly, in an instance, the control system 130 may additionally or alternatively include a component other than those shown and described. Alternatively, some of the foregoing components may be removed.

The vehicle 12 interacts with an external sensor, another vehicle, another computer system, or a user through the peripheral device 140. The peripheral device 140 may include a wireless communication system 141, an in-vehicle computer 142, a microphone 143, and/or a speaker 144. In some embodiments, the peripheral device 140 provides a means for a user of the vehicle 12 to interact with the user interface 170.

The wireless communication system 141 may wirelessly communicate with one or more devices directly or through a communication network.

The power supply 150 may provide power to various components of the vehicle 12.

Some or all of functions of the vehicle 12 are controlled by the computer system 160. The computer system 160 may include at least one processor 161. The processor 161 executes instructions 1621 stored in, for example, a data storage apparatus 162. The computer system 160 may be a plurality of computing devices that control an individual component or a subsystem of the vehicle 12 in a distributed manner.

The processor 161 may be any conventional processor, like a CPU, an ASIC, or another dedicated device of a hardware-based processor. Although FIG. 4 functionally shows the processor, the data storage apparatus, and other elements in a same physical housing, a person of ordinary skill in the art should understand that the processor, the computer system, or the data storage apparatus may actually include a plurality of processors, computer systems, or data storage apparatuses that are stored in the same physical housing, or include a plurality of processors, computer systems, or data storage apparatuses that are stored in different physical housings. For example, the data storage apparatus may be a hard disk drive or another storage medium located in a different physical housing. Therefore, references to the processor or the computer system will be understood as including references to a set of processors or computer systems or data storage apparatuses that can be operated in parallel, or references to a set of processors or computer systems or data storage apparatus that may not be operated in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some processes described herein are performed on a processor disposed inside the vehicle, while other processes are performed by a remote processor, including performing a step necessary for single manipulation.

In some embodiments, the data storage apparatus 162 may include the instructions 1621 (for example, program logic), and the instructions 1621 may be executed by the processor 161 to perform various functions of the vehicle 12, including those functions described above. The data storage apparatus 162 may also include additional instructions, including instructions to send data to, receive data from, interact with, and/or control one or more of the travel system 110, the sensor system 120, the control system 130, and the peripheral device 140.

In addition to the instructions 1621, the data storage apparatus 162 may further store data, such as a road map, route information, a location, a direction, a speed, and other vehicle data of the vehicle, and other information. Such information may be used by the vehicle 12 and the computer system 160 when the vehicle 12 operates in an autonomous mode, a semi-autonomous mode, and/or a manual mode.

The user interface 170 is configured to provide information to or receive information from the user of the vehicle 12. Optionally, the user interface 170 may interact with one or more input/output devices in a set of peripheral devices 140, such as one or more of the wireless communication system 141, the in-vehicle computer 142, the microphone 143, and the speaker 144.

The computer system 160 may control the vehicle 12 based on information obtained from various subsystems (for example, the travel system 110, the sensor system 120, and the control system 130) and information received from the user interface 170.

Optionally, one or more of the foregoing components may be separately installed from or associated with the vehicle 12. For example, the data storage apparatus 162 may partially or completely exist separately from the vehicle 12. The foregoing components may be coupled together for communication in a wired and/or wireless manner.

Optionally, the foregoing components are merely examples. During actual application, components in the foregoing modules may be added or deleted based on an actual requirement. FIG. 3 should not be understood as a limitation to this embodiment of this application.

The vehicle 12 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

In some other embodiments of this application, the autonomous vehicle may further include a hardware structure and/or a software module, and implement the functions in a form of the hardware structure, the software module, or both the hardware structure and the software module. Whether a function in the foregoing functions is performed by using the hardware structure, the software module, or the combination of the hardware structure and the software module depends on specific applications and design constraints of the technical solutions.

For example, FIG. 5 shows an automatic parking method according to an embodiment of this application. The method may be performed by the control device shown in FIG. 1, or may be performed by a processor in the control device, for example, the processor shown in FIG. 2. The method includes the following steps.

S501: Determine parking space information of a plurality of candidate parking spaces based on at least two images of an ego vehicle.

It may be understood that the image may be an environmental image in a specific orientation of the vehicle.

For example, the image may alternatively be an image captured by a visual sensor like a fisheye camera.

In some embodiments, the image may include an image of a candidate parking space. The candidate parking space may be understood as an unoccupied parking space, namely, an empty parking space. Optionally, the image may also include an image other than the image of the candidate parking space, for example, an image of a person, a vehicle, an occupied parking space, or an obstacle.

It may be understood that the parking space in embodiments of this application may include but is not limited to various types of parking spaces such as a parking space in a stereo garage and a marked parking space.

Parking space information may indicate a location of a parking space, for example, a location of the parking space in a stereo garage. In some embodiments, the parking space information may further indicate an entrance direction of the parking space, and the like.

In some embodiments, the at least two images may include environmental images in any at least two orientations of the ego vehicle, for example, environmental images of a left side, a right side, and a front side of the vehicle, or for another example, environmental images of a left side and a front left side of the vehicle. In other words, the at least two images include environmental images in different orientations.

Optionally, the at least two orientations may be adjacent orientations, for example, a left side and a front left side, a left side and a lower left side, a front left side and a front side, or a right side and a lower right side. In this case, the at least two orientations are adjacent orientations, environmental images in the adjacent orientations may have a partially overlapping area, and a candidate parking space may exist in the overlapping area. If the candidate parking space is detected based on each of the two images, it indicates that a probability of existence of the candidate parking space is high. In this way, parking space detection accuracy can be improved.

S502: Determine a target parking space from the plurality of candidate parking spaces based on the parking space information of the plurality of candidate parking spaces.

In a possible implementation, any one of the plurality of candidate parking spaces may be determined as the target parking space.

In another possible implementation, a parking space that meets a preset condition in the plurality of candidate parking spaces may be determined as the target parking space. For example, the preset condition may be being closest to the ego vehicle, or the like. In this way, a candidate parking space closest to the ego vehicle is used as the target parking space. This can improve parking efficiency.

In another possible implementation, the plurality of candidate parking spaces may be further output, and a user selects one of the candidate parking spaces as the target parking space.

S503: Control the ego vehicle to be parked in the target parking space.

Based on the foregoing technical solution, in a vehicle cruise phase, namely, in a process of searching for a parking space, parking space detection is performed based on a plurality of environmental images in a plurality of orientations of the ego vehicle. If one parking space is detected in all the plurality of images, it indicates that a probability of existence of the parking space is high. In this way, accuracy of a parking space detection result can be improved.

In some other embodiments, the at least two images described in step S501 may include a first image and a second image.

The first image is an environmental image in a first orientation of the ego vehicle. Optionally, the first orientation may be any orientation of the ego vehicle, for example, the left side or the right side. Alternatively, the first orientation may be a target orientation of the ego vehicle, and the target orientation may be the same as an orientation of a parking space. It may be understood that the parking space may include an occupied parking space, or may include an unoccupied parking space, namely, a candidate parking space. In this way, when parking space detection is performed based on an environmental image in the target orientation of the ego vehicle, namely, an image in the orientation of the parking space, it is easier to detect the candidate parking space.

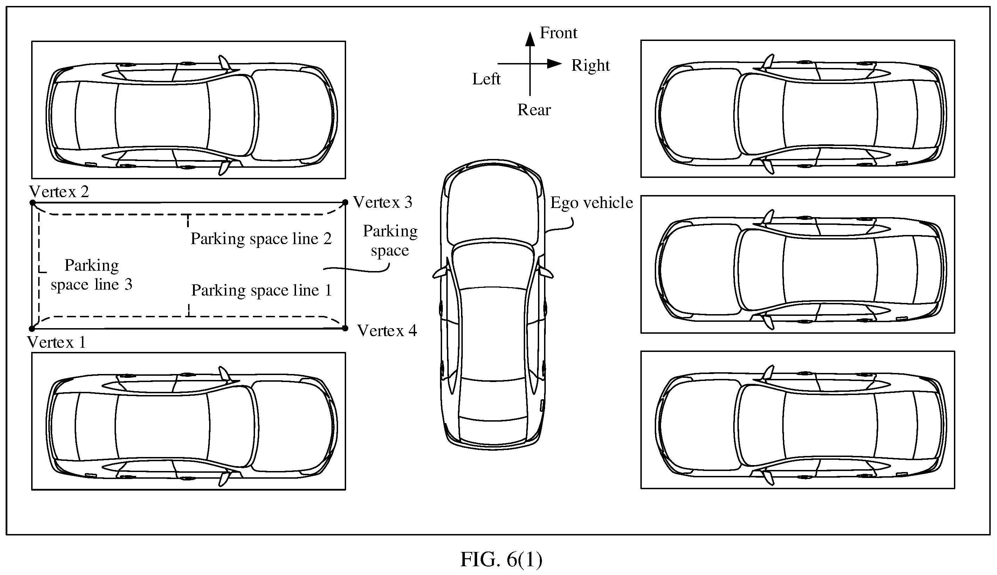

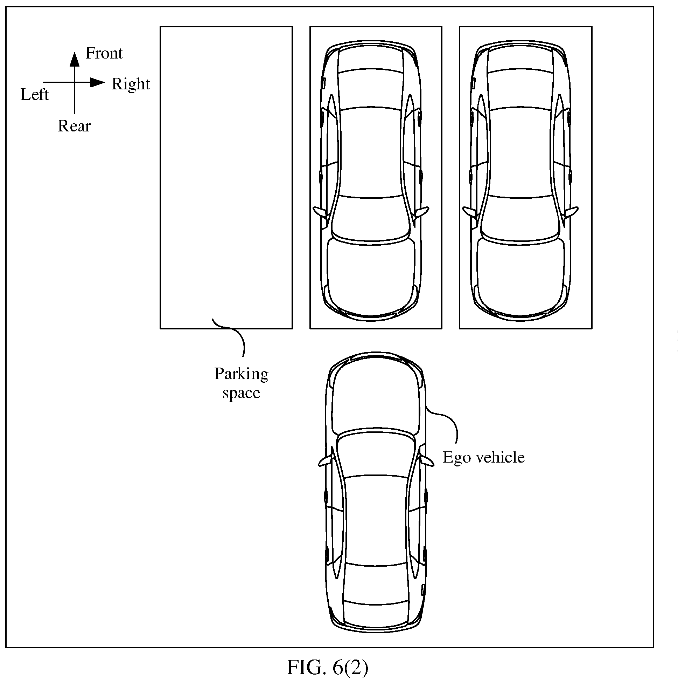

For example, FIG. 6(1) and FIG. 6(2) show some scenario examples of target orientations according to an embodiment of this application. As shown in FIG. 6(1), when parking spaces are located on the left and right sides of the ego vehicle, the target orientation may be the left side, the right side, the left and right sides, or the like of the ego vehicle. As shown in FIG. 6(2), when parking spaces are located in front of the ego vehicle, the target orientation may be the front side of the ego vehicle, or the like.

Optionally, there may be one or more first images. When there are a plurality of first images, the first images may be environmental images in different orientations. For example, the first image may be an image captured by a fisheye camera, or the like.

The second image is a panoramic surround-view image (or referred to as a panoramic image, a surround-view image, or the like) of the ego vehicle. It may be understood that the second image may include the first image, that is, the first image is a part of the second image.

Based on the foregoing technical solution, parking spaces are detected based on an environmental image in a specific orientation of the ego vehicle and the panoramic surround-view image. If a parking space is detected in one image and is also detected in another image, it indicates that a probability of existence of the parking space is high. In this way, accuracy of a parking space detection result can be improved. In addition, the panoramic surround-view image has a wider field of view, so that a detection probability of a parking space can be improved.

In some embodiments, the second image may be generated based on environmental images in different orientations of the ego vehicle. For example, the second image may be a fisheye surround-view image formed by splicing images captured by a plurality of (for example, four) fisheye lenses (this may alternatively be referred to as inverse perspective mapping) (inverse perspective mapping, IPM).

In a possible implementation, the plurality of candidate parking spaces include a first candidate parking space and/or a second candidate parking space, and step S501 may be specifically implemented as step S501a and step S501b (not shown in the figure).

S501a: Determine parking space information of at least one first candidate parking space based on the first image of the ego vehicle.

The first image includes an image of the at least one first candidate parking space. Optionally, the first image may further include an image other than the image of the first candidate parking space, for example, an image of a person, a vehicle, or an obstacle.

Optionally, the parking space information of the at least one first candidate parking space includes at least one of a parking space line, a parking space corner, and a location relationship between parking space corners. For example, the parking space line may be a parking space line 1, a parking space line 2, or a parking space line 3 shown in FIG. 6(1) or the like, and the parking space corner may be a vertex 1, a vertex 2, a vertex 3, or a vertex 4 shown in FIG. 6(1) or the like. The location relationship between the parking space corners may be a location relationship between vertexes shown in FIG. 6(1) or the like.

In some possible implementations, the first image may be input into a first preset model, and the parking space information of the at least one first candidate parking space is output through the first preset model. Optionally, the first preset model may be a model obtained through training by using the first image as an input and parking space information of a candidate parking space as an output. The model may be a machine learning model or a neural network model. This is not limited in this application. Based on this design, the first image is input into the model to recognize the candidate parking space, and in comparison with a conventional feature extraction algorithm or the like, the model is less affected by an environment, light, and the like. This can improve accuracy of a parking space detection result. In addition, in comparison with the conventional feature extraction algorithm or the like, the model avoids excessive manual parameter adjustment and can improve robustness of an overall algorithm.

S501b: Determine parking space information of at least one second candidate parking space based on the second image of the ego vehicle.

The second image includes an image of the at least one second candidate parking space. Optionally, the panoramic image may further include an image other than the image of the second candidate parking space, for example, an image of a person, a vehicle, or an obstacle.

The at least one second candidate parking space includes one or more of the at least one first candidate parking space. In other words, the at least one second candidate parking space and the at least one first candidate parking space include a same candidate parking space.

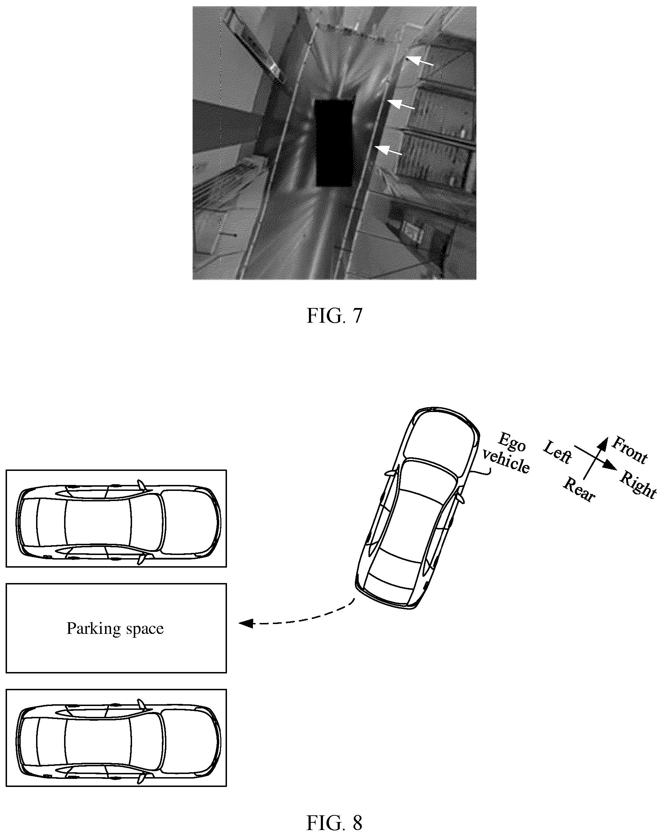

Optionally, the parking space information of the at least one second candidate parking space may include at least one of an entrance direction of the parking space and vertex coordinates of the parking space. For example, a stereo parking space is used as an example. FIG. 7 is a diagram of an entrance direction of a parking space according to an embodiment of this application. As shown in FIG. 7, a direction of a white arrow is an entrance direction (or referred to as an opening direction) of a parking space.

In some possible implementations, the second image may be input into a second preset model, and the parking space information of the at least one second candidate parking space is output through the second preset model. Optionally, the second preset model may be a model obtained through training by using the second image as an input and parking space information of a candidate parking space as an output. The model may be a machine learning model or a neural network model. This is not limited in this application. In this way, the panoramic image is input into the model to recognize the candidate parking space, and in comparison with a conventional feature extraction algorithm or the like, the model is less affected by an environment, light, and the like. This can improve accuracy of a parking space detection result. In addition, in comparison with the conventional feature extraction algorithm or the like, the model avoids excessive manual parameter adjustment and can improve robustness of an overall algorithm.

In a possible implementation, step S502 may be specifically implemented as step S502a and step S502b (not shown in the figure) below.

S502a: Determine at least one third candidate parking space based on the parking space information of the at least one first candidate parking space and the parking space information of the at least one second candidate parking space.

In some embodiments, each of the at least one second candidate parking space corresponds to one confidence level. The third candidate parking space may be a parking space whose confidence level is greater than or equal to a preset confidence level threshold in the at least one second candidate parking space and that belongs to the at least one first candidate parking space.

It may be understood that, in embodiments of this application, the confidence level indicates accuracy of a parking space detection result. A higher confidence level indicates a more accurate parking space detection result, and a more accurate parking space detection result may indicate a higher probability of existence of a parking space and/or a more accurate location of the parking space. For example, if a confidence level corresponding to a candidate parking space 1 is 5, a confidence level corresponding to a candidate parking space 2 is 7, and the confidence level 7 is greater than the confidence level 5, it indicates that a probability of existence of the candidate parking space 2 is greater than that of the candidate parking space 1, or it indicates that a location of the candidate parking space 2 is more accurate than a location of the candidate parking space 1.

Optionally, the confidence level corresponding to the second candidate parking space may be output by the second preset model. For example, for each second candidate parking space, the second preset model outputs a corresponding confidence level, to reflect accuracy of a detection result corresponding to the candidate parking space.

In some other embodiments, each of the at least one first candidate parking space corresponds to one confidence level. The third candidate parking space may be a parking space whose confidence level is greater than or equal to a preset confidence level threshold in the at least one first candidate parking space and that belongs to the at least one second candidate parking space.

Optionally, the confidence level corresponding to the first candidate parking space may be output by the first preset model. For example, for each first candidate parking space, the first preset model outputs a corresponding confidence level, to reflect accuracy of a detection result corresponding to the candidate parking space.

In some other embodiments, each of the at least one second candidate parking space corresponds to one confidence level, and each of the at least one first candidate parking space may also correspond to one confidence level. The third candidate parking space may be a parking space whose confidence level is greater than or equal to a first preset confidence level threshold in the at least one second candidate parking space and whose confidence level is greater than or equal to a second preset confidence level threshold in the at least one first candidate parking space. In other words, the confidence level of the third candidate parking space is greater than or equal to the first preset confidence level threshold, and is greater than or equal to the second preset confidence level threshold.

It may be understood that, in embodiments of this application, each confidence level threshold may be set by a developer based on an actual requirement. This is not limited in this application.

S502b: Determine the target parking space based on the at least one third candidate parking space.

In a possible implementation, any one of a plurality of third candidate parking spaces may be determined as the target parking space.

In another possible implementation, a parking space that meets a preset condition in a plurality of third candidate parking spaces may be rated as the target parking space. For example, the preset condition may be being closest to the ego vehicle, or the like. In this way, a candidate parking space closest to the ego vehicle is used as the target parking space. This can improve parking efficiency.

In another possible implementation, a candidate parking space with a highest corresponding confidence level in a plurality of third candidate parking spaces may be determined as the target parking space. Optionally, the confidence level may be output by the first preset model, or may be output by the second preset model.

In another possible implementation, a plurality of third candidate parking spaces may be further output, and the user selects one of the third candidate parking spaces as the target parking space.

Based on the foregoing technical solution, the target parking space is determined based on the confidence level of the candidate parking space, and the confidence level may reflect accuracy of a parking space detection result. In this way, a candidate parking space with a high confidence level is used as the target parking space, that is, an accurately detected candidate parking space is used as the target parking space. This can further improve the accuracy of the parking space detection result.

The foregoing mainly describes the cruise phase, namely, the process of searching for the parking space. The following describes a parking phase, namely, a process of parking the vehicle in the parking space after the parking space is found.

In some embodiments, the method shown in FIG. 5 further includes the following steps (not shown in the figure).

S504: Capture a third image of the ego vehicle in a process of controlling the ego vehicle to be parked in the target parking space.

The third image is an environmental image in a third orientation of the ego vehicle, and the third image includes an image of the target parking space. Optionally, the third image may further include an image other than the image of the target parking space, for example, an image of a person, a vehicle, or an obstacle.

In some embodiments, the third image may be an environmental image in an orientation close to a side of the parking space. As shown in FIG. 8, the third image may be, for example, a left environmental image and/or a rear environmental image of the ego vehicle.

Optionally, there may be one or more third images. When there are a plurality of third images, the third images may be environmental images in different orientations.

Optionally, orientations corresponding to the first image and the third image may be the same or may be different.

S505: Update parking space information of the target parking space based on the third image.

Optionally, first parking space information of the target parking space may be determined based on the third image, and then the parking space information of the target parking space is updated based on the determined first parking space information. For example, a parking space line and a location of a parking space corner of the target parking space are calibrated. Optionally, the third image may be input into the first preset model, and the first parking space information of the target parking space is output through the first preset model. For example, the third image may alternatively be an image captured by a fisheye camera.

Based on this design, in the parking phase, that is, in the process of parking the ego vehicle in the target parking space, location information of the target parking space is calibrated by using the third image including the target parking space. This can improve parking accuracy.

The foregoing mainly describes the solutions provided in embodiments of this application from the perspective of the methods. It may be understood that, to implement the foregoing functions, a recognition model training apparatus includes a corresponding hardware structure and/or a corresponding software module for performing each function. With reference to the units and algorithm steps described in embodiments disclosed in this application, embodiments of this application can be implemented in a form of hardware or a combination of hardware and computer software. Whether a function is performed by hardware or hardware driven by a computer depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, the recognition model training apparatus may be divided into functional modules based on the foregoing method example. For example, each functional module may be obtained through division based on each corresponding function, or two or more functions may be integrated into one processing unit. The integrated unit may be implemented in a form of hardware, or may be implemented in a form of a software functional module. It should be noted that, in embodiments of this application, division into units is an example, and is merely a logical function division. During actual implementation, another division manner may be used.

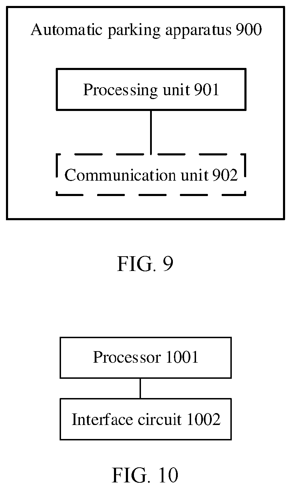

FIG. 9 is a diagram of a structure of an automatic parking apparatus according to an embodiment of this application. An automatic parking apparatus 900 may be configured to implement the methods recorded in the foregoing method embodiments. Optionally, the automatic parking apparatus may be the control device 11 shown in FIG. 1, or may be a module (for example, a chip) used in a server. The server may be located in the cloud. For example, the automatic parking apparatus 900 may specifically include a processing unit 901.

The processing unit 901 is configured to support the automatic parking apparatus 900 in performing step S501 to step S503 in FIG. 5; and/or the processing unit 901 is further configured to support the automatic parking apparatus 900 in performing other steps performed by the automatic parking apparatus in embodiments of this application.

Optionally, the automatic parking apparatus 900 shown in FIG. 9 may further include a communication unit 902. The communication unit 902 is configured to support the automatic parking apparatus 900 in performing the step of communication between the automatic parking apparatus and another device in embodiments of this application.

Optionally, the automatic parking apparatus 900 shown in FIG. 9 may further include a storage unit (not shown in FIG. 9), and the storage unit stores a program or instructions. When the processing unit 901 executes the program or the instructions, the automatic parking apparatus 900 shown in FIG. 9 can perform the method in the foregoing method embodiments.

For technical effects of the automatic parking apparatus 900 shown in FIG. 9, refer to the technical effects described in the foregoing method embodiments. Details are not described herein again. The processing unit 901 in the automatic parking apparatus 900 shown in FIG. 9 may be implemented by a processor or a processor-related circuit component, and may be a processor or a processing module. The communication unit 902 may be implemented by a transceiver or a transceiver-related circuit component, and may be a transceiver or a transceiver module.

An embodiment of this application further provides a chip system. As shown in FIG. 10, the chip system includes at least one processor 1001 and at least one interface circuit 1002. The processor 1001 and the interface circuit 1002 may be interconnected through a line. For example, the interface circuit 1002 may be configured to receive a signal from another apparatus. For another example, the interface circuit 1002 may be configured to send a signal to another apparatus (for example, the processor 1001). For example, the interface circuit 1002 may read instructions stored in a memory, and send the instructions to the processor 1001. When the instructions are executed by the processor 1001, the automatic parking apparatus may perform the steps performed by the automatic parking apparatus in the foregoing embodiments. Certainly, the chip system may further include another discrete component. This is not specifically limited in embodiments of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer storage medium. The computer storage medium stores computer instructions. When the computer instructions are run on an automatic parking apparatus, the automatic parking apparatus is enabled to perform the method in the foregoing method embodiments.

An embodiment of this application provides a computer program product. The computer program product includes a computer program or instructions. When the computer program or the instructions are run on a computer, the computer is enabled to perform the methods in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the methods in the foregoing method embodiments.

The automatic parking apparatus, the computer storage medium, the computer program product, or the chip provided in embodiments are all configured to perform the corresponding methods provided above. Therefore, for beneficial effects that can be achieved by the automatic parking apparatus, the computer storage medium, the computer program product, or the chip, refer to the beneficial effects of the corresponding methods provided above. Details are not described herein again.

Based on the descriptions about the foregoing implementations, a person skilled in the art may understand that, for a purpose of convenient and brief description, division into the foregoing functional modules is used as an example for illustration. During actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. The embodiments may be combined or referenced with each other without conflict. The described apparatus embodiments are merely examples. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An automatic parking method, wherein the method comprises:
determining parking space information of a plurality of candidate parking spaces based on a first image and a second image of an ego vehicle, wherein the parking space information indicates locations of the parking spaces in a stereo garage, the first image is an environmental image in a first orientation of the ego vehicle, and the second image is a panoramic surround-view image of the ego vehicle;
determining a target parking space from the plurality of candidate parking spaces based on the parking space information of the plurality of candidate parking spaces; and
controlling the ego vehicle to be parked in the target parking space.

2. The method according to claim 1, wherein the determining parking space information of a plurality of candidate parking spaces based on a first image and a second image of an ego vehicle comprises:
determining parking space information of at least one first candidate parking space based on the first image of the ego vehicle, wherein the first image comprises an image of the at least one first candidate parking space; and
determining parking space information of at least one second candidate parking space based on the second image of the ego vehicle, wherein the second image comprises an image of the at least one second candidate parking space, and the at least one second candidate parking space comprises one or more of the at least one first candidate parking space.

3. The method according to claim 2, wherein the parking space information of the at least one first candidate parking space comprises at least one of a parking space line, a parking space corner, and a location relationship between parking space corners.

4. The method according to claim 2 or 3, wherein the parking space information of the at least one second candidate parking space comprises at least one of an entrance direction of the parking space and vertex coordinates of the parking space.

5. The method according to any one of claims 2 to 4, wherein the determining a target parking space from the plurality of candidate parking spaces based on the parking space information of the plurality of candidate parking spaces comprises:
determining at least one third candidate parking space based on the parking space information of the at least one first candidate parking space and the parking space information of the at least one second candidate parking space, wherein the third candidate parking space is a parking space whose confidence level is greater than or equal to a preset confidence level threshold in the at least one second candidate parking space and that belongs to the at least one first candidate parking space, and the confidence level indicates accuracy of a parking space detection result; and
determining the target parking space based on the at least one third candidate parking space.

6. The method according to any one of claims 1 to 5, wherein the method further comprises:
capturing a third image of the ego vehicle in a process of controlling the ego vehicle to be parked in the target parking space, wherein the third image is an environmental image in a third orientation of the ego vehicle, and the third image comprises an image of the target parking space; and
updating parking space information of the target parking space based on the third image.

7. The method according to any one of claims 2 to 6, wherein the determining parking space information of at least one first candidate parking space based on the first image of the ego vehicle comprises:
inputting the first image into a first preset model, and outputting the parking space information of the at least one first candidate parking space through the first preset model.

8. The method according to any one of claims 2 to 7, wherein the determining parking space information of at least one second candidate parking space based on the second image of the ego vehicle comprises:
inputting the second image into a second preset model, and outputting the parking space information of the at least one second candidate parking space through the second preset model.

9. An automatic parking apparatus, comprising a processing unit, wherein
the processing unit is configured to determine parking space information of a plurality of candidate parking spaces based on a first image and a second image of an ego vehicle, wherein the parking space information indicates locations of the parking spaces in a stereo garage, the first image is an environmental image in a first orientation of the ego vehicle, and the second image is a panoramic surround-view image of the ego vehicle;
the processing unit is further configured to determine a target parking space from the plurality of candidate parking spaces based on the parking space information of the plurality of candidate parking spaces; and
the processing unit is further configured to control the ego vehicle to be parked in the target parking space.

10. The apparatus according to claim 9, wherein
the processing unit is specifically configured to determine parking space information of at least one first candidate parking space based on the first image of the ego vehicle, wherein the first image comprises an image of the at least one first candidate parking space; and
the processing unit is specifically configured to determine parking space information of at least one second candidate parking space based on the second image of the ego vehicle, wherein the second image comprises an image of the at least one second candidate parking space, and the at least one second candidate parking space comprises one or more of the at least one first candidate parking space.

11. The apparatus according to claim 10, wherein the parking space information of the at least one first candidate parking space comprises at least one of a parking space line, a parking space corner, and a location relationship between parking space corners.

12. The apparatus according to claim 10 or 11, wherein the parking space information of the at least one second candidate parking space comprises at least one of an entrance direction of the parking space and vertex coordinates of the parking space.

13. The apparatus according to any one of claims 10 to 12, wherein
the processing unit is specifically configured to determine at least one third candidate parking space based on the parking space information of the at least one first candidate parking space and the parking space information of the at least one second candidate parking space, wherein the third candidate parking space is a parking space whose confidence level is greater than or equal to a preset confidence level threshold in the at least one second candidate parking space and that belongs to the at least one first candidate parking space, and the confidence level indicates accuracy of a parking space detection result; and
the processing unit is specifically configured to determine the target parking space based on the at least one third candidate parking space.

14. The apparatus according to any one of claims 9 to 13, wherein
the processing unit is further configured to capture a third image of the ego vehicle in a process of controlling the ego vehicle to be parked in the target parking space, wherein the third image is an environmental image in a third orientation of the ego vehicle, and the third image comprises an image of the target parking space; and
the processing unit is further configured to update parking space information of the target parking space based on the third image.

15. The apparatus according to any one of claims 10 to 14, wherein
the processing unit is specifically configured to: input the first image into a first preset model, and output the parking space information of the at least one first candidate parking space through the first preset model.

16. The apparatus according to any one of claims 10 to 15, wherein
the processing unit is specifically configured to: input the second image into a second preset model, and output the parking space information of the at least one second candidate parking space through the second preset model.

17. An automatic parking apparatus, comprising a processor, wherein the processor is coupled to a memory, and the processor is configured to execute a computer program stored in the memory, for the automatic parking apparatus to perform the method according to any one of claims 1 to 8.

18. A computer-readable storage medium, wherein the computer-readable storage medium comprises a computer program or instructions, and when the computer program or the instructions are run on an automatic parking apparatus, the automatic parking apparatus is enabled to perform the method according to any one of claims 1 to 8.

19. A computer program product, wherein the computer program product comprises a computer program or instructions, and when the computer program or the instructions are run on a computer, the computer is enabled to perform the method according to any one of claims 1 to 8.
